# EUROPÄISCHE PATENTSCHRIFT

(11) **EP 2 996 888 B1**
(45) Veröffentlichungstag und Bekanntmachung des Hinweises auf die Patenterteilung: **19.04.2017**
(21) Anmeldenummer: 14735458.3
(22) Anmeldetag: 15.05.2014
(51) Int. Cl.: B60C 23/04

(54) **REIFENMODUL ZUR MESSUNG DES REIFENDRUCKS EINES FAHRZEUGREIFENS**
TIRE MODULE FOR MEASURING THE TIRE PRESSURE OF A VEHICLE TIRE
MODULE DE PNEUMATIQUE PERMETTANT DE MESURER LA PRESSION DU PNEUMATIQUE D'UN VÉHICULE

(30) Priorität: 16.05.2013 DE 102013008541
(43) Veröffentlichungstag der Anmeldung: 23.03.2016
(73) Patentinhaber: Huf Hülsbeck & Fürst GmbH & Co. KG, 42551 Velbert (DE)
(72) Erfinder: GORENZWEIG, Igor, 42109 Wuppertal (DE); MÖNIG, Stefan, 58332 Schwelm (DE); MÜLLER, Benjamin, 76185 Karlsruhe (DE)
(86) Internationale Anmeldenummer: PCT/DE2014/200219
(87) Internationale Veröffentlichungsnummer: WO 2014/183762

(56) Entgegenhaltungen:
- EP-A1- 1 961 588
- DE-A1-102010 000 003
- DE-A1-102010 038 136
- FR-A1- 2 952 856
- US-B1- 6 534 711

## Beschreibung

Die Erfindung betrifft ein Reifenmodul zur Messung des Reifendrucks eines Fahrzeugreifens aufweisend einen Container, welcher in einem Hohlraum des Fahrzeugreifens befestigbar ist und zur Aufnahme einer Reifendruckerfassungseinheit dient, welche zumindest ein Elektronikmodul zur Erfassung des Reifendrucks umfasst. Das Reifenmodul weist einen Behälter auf, in welchem zumindest teilweise das Elektronikmodul angeordnet ist, wobei das Elektronikmodul in einer innerhalb des Behälters angeordneten Vergussmasse eingebettet ist. Ferner betrifft die Erfindung ein Verfahren zum Herstellen eines Reifenmoduls.
Aus dem Stand der Technik ist ein Reifenmodul zur Messung des Reifendrucks bekannt, welches einen Container und einen Behälter sowie ein Elektronikmodul umfasst. Der Behälter ist innerhalb eines Containers angeordnet, wobei der Container an einem Fahrzeugreifen befestigt wird. Innerhalb des Behälters ist das Elektronikmodul angeordnet, welches in einer Vergussmasse eingebettet ist. Der Behälter ist topfförmig ausgebildet und weist lediglich eine Öffnung zum Einfüllen der Vergussmasse auf. Nachteilig ist bei dieser Anordnung, dass beim Vergießen der Elektronik, insbesondere des Elektronikmoduls, es zur Blasenbildung in der Vergussmasse kommt. Während der Fahrt entstehen hohe Kräfte, welche auf den Behälter wirken, so dass sich dort Risse in der Vergussmasse bilden, wo zuvor sich Blasen gebildet haben. Durch diese Risse kann die innerhalb des Reifens angeordnete Feuchtigkeit bzw. Staub durch Kapillarwirkung zu dem Elektronikmodul gelangen. Insbesondere die Feuchtigkeit führt zur Korrosion des Elektronikmoduls, so dass es zu einem Ausfall, insbesondere zu einem Kurzschluss des Elektronikmoduls führt. Eine einwandfreie Funktion des Reifenmoduls ist folglich ausgeschlossen, wenn es zu Rissen in der Vergussmasse kommt.
Des Weiteren kann sich die Vergussmasse vom Behälter lösen, wenn sich die Blasen, insbesondere Lufteinschlüsse, an der Wandung des Behälters bilden. Folglich wird die Haftungsfläche zwischen der inneren Wandung des Behälters und der Vergussmasse verschlechtert.

Die FR2952856A1 beschreibt eine reifenmontierte Elektronikeinheit, die zur Messung der Betriebsparameter dient.
Die Elektronikeinheit umfasst ein Gehäuse, das eine Einfüllöffnung für die Vergussmasse aufweist und und eine Öffnung zur Messung des Drucks, die gleichzeitig zur Entlüftung beim Vergießen der im Gehäuse befindlichen Elektronik dient.
Die US6,534,711B1 beschreibt eine reifenmontierte Elektronikeinheit, die einen Behälter mit zwei Kammern aufweist. Im Behälter sind elektronische Bauteile angeordnet. Die Kammern mit darin befindlichen elektronischen Bauteilen sind nacheinander mit Vergussmasse befüllbar.

Der vorliegenden Erfindung liegt die Aufgabe zugrunde, ein Elektronikmodul eines Reifenmoduls vor Beschädigungen zu schützen.

Die Aufgabe wird dadurch gelöst, dass der Behälter mindestens eine Entlüftungsöffnung aufweist.

Der Vorteil der Entlüftungsöffnung ist, dass das beim Vergießen des Elektronikmoduls in dem Behälter angeordnete Gas, insbesondere Luft, über die Entlüftungsöffnungen entweichen bzw. ausströmen kann und Blasen bzw. Lufteinschlüsse in der Vergussmasse, d.h. eingeschlossene Luft in der Vergussmasse , ausgeschlossen sind. Dies führt dazu, dass Risse in der Vergussmasse verhindert werden. Aus diesem Grund ist ein Eindringen von innerhalb des Reifens angeordneter Feuchtigkeit durch die Kapillarwirkung in das Elektronikmodul ausgeschlossen. Des Weiteren wird das Ablösen der Vergussmasse von dem Behälter, insbesondere einer Wandung des Behälters verhindert, weil zwischen der inneren Wandung und der Vergussmasse eine Spaltbildung durch Lufteinschlüsse ausgeschlossen ist, wodurch die Haftung der Vergussmasse an der Wandung verbessert wird.

Nach einer weiteren vorteilhaften Ausführungsform der Erfindung ist vorgesehen, dass eine erste Entlüftungsöffnungen und eine zweite Entlüftungsöffnung vorgesehen sind, wobei die erste Entlüftungsöffnung im Wesentlichen gegenüber von der zweiten Entlüftungsöffnung angeordnet ist.
Durch diese Maßnahme gelingt es, die in den Behälter einströmende Vergussmasse gleichmäßig zu verteilen.

Sehr kostengünstig und einfach ist die Konstruktion, wenn die Entlüftungsöffnung schlitzförmig oder rundförmig ausgebildet ist.
Dadurch wird gewährleistet, dass ein vollständiges Ausströmen der Vergussmasse aus dem Behälter verhindert wird.

Nach einer weiteren bevorzugten Ausführungsform der Erfindung ist vorgesehen, dass das Reifenmodul eine Wanne umfasst, welche zur Aufnahme des Behälters dient. Die Wanne nimmt den Behälter einschließlich der Vergussmasse auf, welche aus den Entlüftungsöffnungen herausströmt. Die Lösung zeigt weiter den Vorteil, dass die Wanne zusätzlich als Gießform für das Einbetten des Behälters verwendet werden kann.
Durch diese Maßnahme gelingt es weiter, das Reifenmodul nach dem Vergießen in eine genau definierte Form zu bringen.

Nach einer weiteren bevorzugten Ausführungsform der Erfindung ist vorgesehen, dass der Behälter und die Wanne im Wesentlichen komplementär zueinander ausgebildet sind, wobei die Wanne und der Behälter beabstandet zueinander angeordnet sind.
Diese Lösung zeichnet sich besonders dadurch aus, dass die im Behälter eingeschossenen Gase und/oder die Vergussmasse durch den Spalt zwischen dem Behälter und der Wanne ungehindert strömen können.

Sehr einfach und kostengünstig ist die Konstruktion, wenn zwischen einer Wandung des Behälters und einer Wandung der Wanne ein Spalt angeordnet ist, in welchem nach dem Vergießen des Behälters Vergussmasse angeordnet ist, welche der Wanne durch die Entlüftungsöffnungen des Behälters zuführbar ist.

Der Fertigungsprozess wird verbessert, wenn der Behälter und/oder die Wanne im Wesentlichen als topfförmiger Hohlzylinder ausgebildet ist, welcher jeweils eine als Seitenwandung ausgebildete Mantelfläche und als Bodenwandung ausgebildete Grundfläche aufweist. Die Bodenwandung weist eine nach außen gerichtete Wölbung auf.

Sehr einfach und kostengünstig ist die Konstruktion, wenn der Behälter und/oder die Wanne im Wesentlichen als topfförmiger Hohlzylinder ausgebildet ist, welcher jeweils eine als Seitenwandung ausgebildete Mantelfläche und als Bodenwandung ausgebildete Grundfläche aufweist.

Eine gleichmäßige Entlüftung wird sichergestellt, wenn der Behälter Entlüftungsöffnung aufweist, welche in der Grundfläche und/oder Mantelfläche des Behälters angeordnet sind.

Durch diese Maßnahme gelingt es, dass die eingeschlossenen Gase, die beim Vergießen des Elektronikmoduls im Bereich der inneren Wandung des Behälters bzw. Mantelfläche entstehen, effizient unter Vakuum nach außen abzuleiten.

Nach einer weiteren bevorzugten Ausführungsform der Erfindung ist vorgesehen, dass der Behälter und das Elektronikmodul formschlüssig und/oder kraftschlüssig und/oder stoffschlüssig miteinander verbunden sind.
Die Verbindung des Behälters mit dem Elektronikmodul kann durch eine Klebeverbindung, eine Schraubverbindung, eine Klipsverbindung, einen Bajonettverschluss oder durch Presspassung erfolgen. Somit wird verhindert, dass das Elektronikmodul sich aus dem Behälter löst und heraus fällt. Weiter ist in Vorteilhafterweise das Elektronikmodul im Behälter auf einfache Weise positionierbar, so dass die Prozesssicherheit des Herstellungsprozesses erhöht wird. Des Weiteren kann eine schnelle Montage des Elektronikmoduls im Behälter erfolgen, wodurch eine effiziente Produktion von Reifendruckmodulen ermöglicht wird.

Nach einer weiteren bevorzugten Ausführungsform der Erfindung ist vorgesehen, dass mindestens ein Positioniermittel und/oder mindestens ein Haltemittel dem Behälter und/oder dem Elektronikmodul zugeordnet sind, die zur Verbindung des Elektronikmoduls mit dem Behälter dienen.
Ein weiterer Vorteil hierbei liegt darin, dass das Elektronikmodul so positioniert und gehalten wird, dass eine Verdeckung der am Behälter angeordneten Entlüftungsöffnungen durch das Elektronikmodul ausgeschlossen ist. Dadurch wird gewährleistet, dass beim Vergießen eine einwandfreie Ausströmung von Gas, insbesondere von Luft stattfindet.

Die Montage des Elektronikmoduls wird vereinfacht, wenn mindestens ein Positioniermittel und/oder mindestens ein Haltemittel an einer inneren Wandlung der Mantelfläche des Behälters angeordnet sind.
Durch diese Anordnung der Positioniermittel und/oder Haltemittel ist gewährleistet, dass das Elektronikmodul sicher und stabil gelagert ist. Des Weiteren wird die Steifigkeit des Behälters, insbesondere durch die mindestens an einer inneren Wandlung der Mantelfläche des Behälters angeordnete Rippe, erhöht. Dies führt zur verbesserten Dauerhaltbarkeit des Reifenmoduls.
Nach einer weiteren bevorzugten Ausführungsform der Erfindung ist vorgesehen, dass das Elektronikmodul einen Schaltungsträger, insbesondere ein Piezoelement aufweist, welcher stoffschlüssig oder formschlüssig oder kraftschlüssig, insbesondere mit einem doppelseitig klebenden Element, mit der äußeren Grundfläche des Behälters verbunden ist. Ein auf dem Elektronikmodul zugeordnetes Piezoelement dient zur Erzeugung von Energie zur Energieversorgung des Reifenmoduls.
Durch diese Maßnahme gelingt es, dass eine schnelle Montage des Elektronikmoduls im Behälter erfolgen kann, wodurch eine effiziente Produktion von Reifendruckmodulen ermöglicht wird und gleichzeitig die Energieversorgung für das Reifenmodul sichergestellt wird.
Die Aufgabe wird weiter durch ein Verfahren zum Herstellen eines Reifenmoduls gelöst, wobei das Reifenmodul mindestens
- einen Container,
- eine Reifendruckerfassungseinheit umfassend ein Elektronikmodul und
- einen Behälter mit Entlüftungsöffnungen aufweist, wobei das Verfahren folgende Schritte umfasst:
   a) Anordnen des Elektronikmoduls in den Behälter,
   b) Positionieren und/oder Befestigen des Moduls im Behälter,
   c) Einfüllen von Vergussmasse in den Behälter, um das innerhalb des Behälters angeordnete Elektronikmodul abzudichten,
   d) Anordnen des Behälters aufweisend das Elektronikmodul in den Container, und
   e) Befestigung des Reifenmoduls, insbesondere des Containers, an einer inneren Wandung des Reifens.

Gemäß der Erfindung ist vorgesehen, dass vor dem Einfüllen von Vergussmasse der Behälter in eine Wanne angeordnet wird und beim anschließenden Einfüllen der Vergussmasse das in dem Behälter angeordnete Gas, insbesondere Luft, durch die Entlüftungsöffnungen des Behälters in einen durch die Wanne und den Behälter gebildeten Spalt strömt.

Nach einer weiteren bevorzugten Ausführungsform der Erfindung ist vorgesehen, dass das in den Spalt eingeströmte Gas während des Vergießens der Vergussmasse und/oder nach dem Vergießen der Vergussmasse durch eine Saugvorrichtung abgesaugt wird, um Gaseinschlüsse in der Vergussmasse zu verhindern.

Nach einer weiteren bevorzugten Ausführungsform der Erfindung ist vorgesehen, dass die Vergussmasse durch die Entlüftungsöffnungen des Behälters strömt und die Vergussmasse nach dem Erstarren den Behälter mit der Wanne verbindet, wobei der in der Wanne angeordnete Behälter anschließend in den Container angeordnet wird.

Die Erfindung wird anhand eines Ausführungsbeispieles näher erläutert.
Es zeigen:
- Figur 1:: Eine Prinzipskizze eines Reifenmoduls in einer Schnitteinsicht,
- Figur 2:: einen Behälter mit einem Elektronikmodul,
- Figur 3:: den Behälter,
- Figur 4:: den Behälter mit dem unbefestigten Elektronikmodul und
- Figur 5:: den Behälter mit dem befestigten Elektronikmodul.

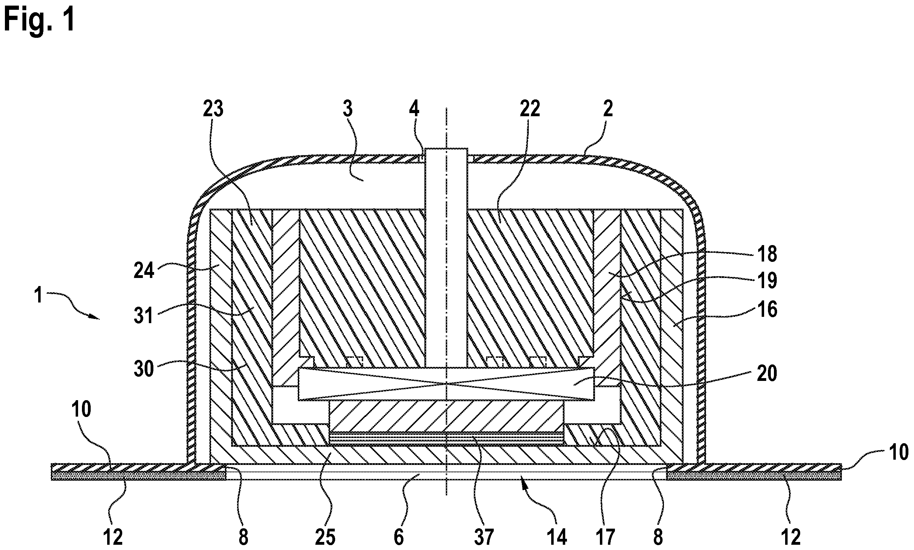

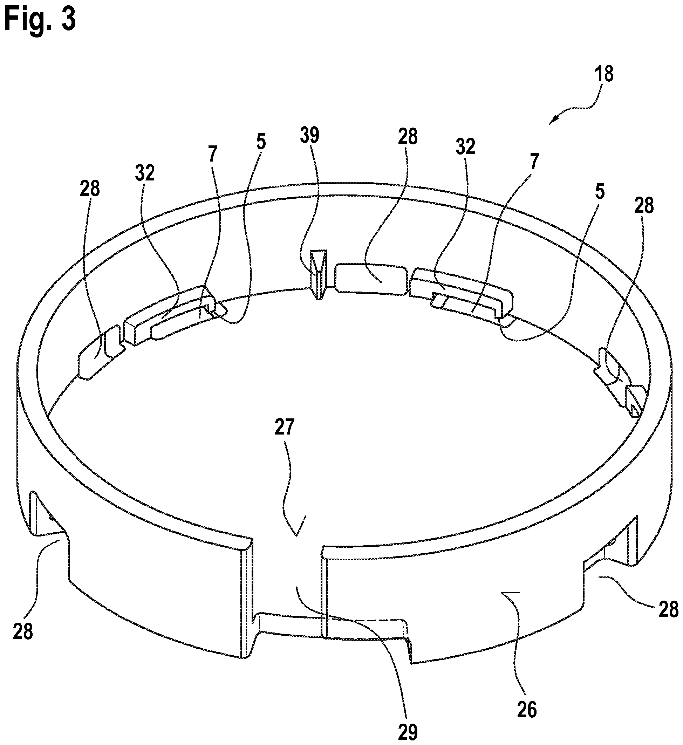

Die Figur 1 zeigt ein Reifenmodul 1 zur Messung des Reifendrucks eines nicht näher dargestellten Fahrzeugreifens eines Kraftfahrzeugs, insbesondere eines Personenkraftwagens. Das Reifenmodul 1 weist einen aus elastischem Material, insbesondere aus Gummi, ausgebildeten Container 2 auf. Der Container 2 ist im Wesentlichen zylinderförmig ausgestaltet und umfasst eine Kammer 3. Der Container 2 weist eine erste Öffnung 4 und eine zweite Öffnung 6 auf. Der Container 2 ist mit einem ersten Flansch 8 und einem zweiten Flansch 10 versehen, wobei der erste Flansch 8 zur Öffnung 6 ausgerichtet ist. Auf einem Abschnitt 11 des ersten Flansches 8 und des zweiten Flansches 10 ist ein Haftvermittlungsmittel 12 angeordnet, um das Reifenmodul 1 stoffschlüssig mit einer inneren Fläche des Reifens, welche innerhalb eines Hohlraums des Fahrzeugreifens angeordnet ist, stoffschlüssig zu verbinden. Die Kammer 3 dient zur Aufnahme einer Reifendruckerfassungseinheit 14. Die Reifendruckerfassungseinheit 14 umfasst eine als topfförmigen Hohlzylinder ausgebildete Wanne 16, einen als topfförmigen Hohlzylinder ausgebildeten Behälter 18 und ein Elektronikmodul 20 zur Erfassung des Reifendrucks, sowie die Vergussmasse 22. Alternativ besteht ebenfalls die Möglichkeit, bei der Reifendruckerfassungseinheit 14 auf die Wanne 16 zu verzichten, die im Folgenden beschrieben wird. Die zylinderförmig ausgebildete Wanne 16 dient zur Aufnahme des Behälters 18, wobei die Wanne 16 lediglich eine einzige Montageöffnung 23 zur Montage des Behälters 18 aufweist. Grundsätzlich umfasst die zylinderförmig ausgebildete Wanne 16 eine als Mantelfläche ausgebildete Seitenwandung 24 und einen als Grundfläche ausgebildete Bodenwandung 25.

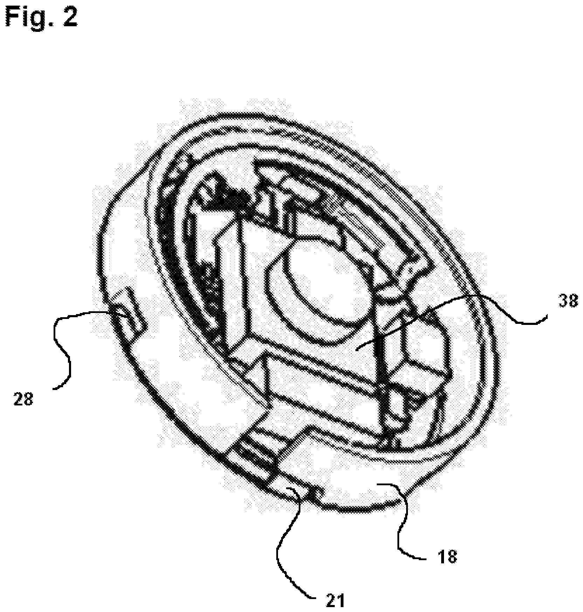

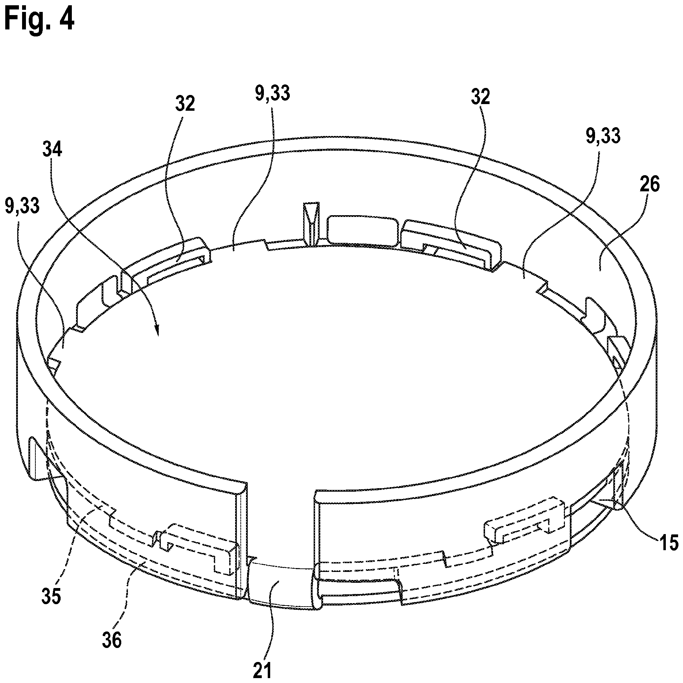

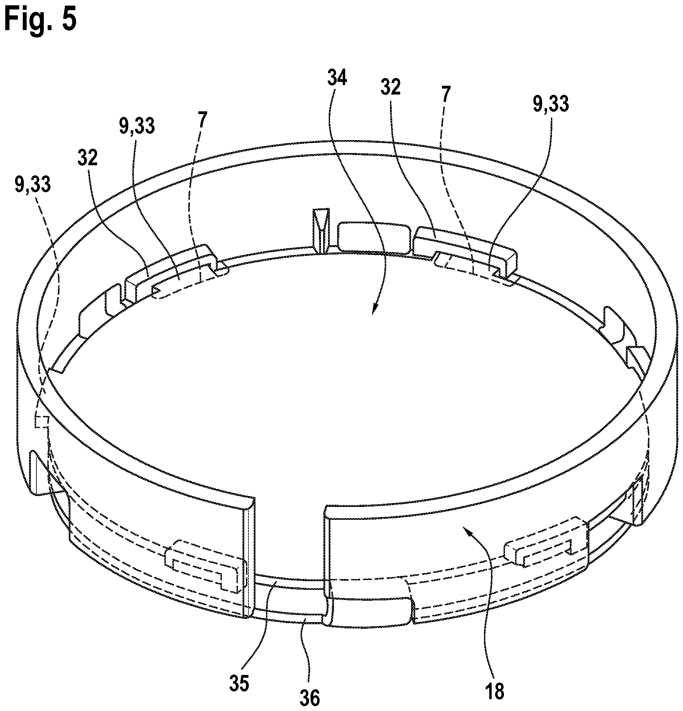

In den Figuren 2 bis 5 ist der Behälter 18 visualisiert. Der Behälter 18 weist Entlüftungsöffnungen 28 auf, welche in einer als Seitenwandung 26 ausgebildeten Mantelfläche und in einer als Bodenwandung 27 ausgebildeten Grundfläche des Behälters 18 angeordnet sind. Im vorliegenden Ausführungsbeispiel sind die Entlüftungsöffnungen 28 als Löcher ausgebildet. Des Weiteren weist die Seitenwandung 26 und die Bodenwandung 27 eine Ausnehmung 29 auf, welche als Entlüftungsöffnung dienen kann und zum Durchführen einer elektrischen Leitung 21 ausgebildet ist. Die Materialsteifigkeit des Kunststoffs, aus welchem der Behälter 18 ausgebildet ist, ist im Vergleich zur Wanne16 größer.
Der Behälter 18 und die Wanne 16 sind im Wesentlichen komplementär zueinander ausgebildet sind, wobei die Wanne 16 und der Behälter 18 beabstandet zueinander angeordnet sind. Der Behälter 18 und das Elektronikmodul 20 sind im vorliegenden Fall formschlüssig, alternativ kraftschlüssig oder stoffschlüssig, miteinander verbunden. Um die formschlüssige Verbindung sicherzustellen, sind dem Behälter 18 Positioniermittel und Haltemittel 32 zugeordnet, die zur Verbindung des Elektronikmoduls 20 mit dem Behälter 18 dienen. Dabei sind die Positioniermittel und Haltemittel 32 an der Seitenwandung 26 der Mantelfläche des Behälters 18 und der Bodenwandung 27 der Grundfläche des Behälters 18 angeordnet. Das Elektronikmodul 20 weist ebenfalls Positioniermittel und Haltemittel 33 auf, welche nach der Montage des Elektronikmoduls 20 in dem Behälter 18 mit dem Positioniermittel und Haltemittel 32 formschlüssig in Wirkverbindung stehen. In den Figuren 3 bis 5 sind die Positionier-und Haltemittel 32 des Behälters 18 als Rasthaken und die Positionier- und Haltemittel 33 des Elektronikmoduls 18 als Vorsprung 9 ausgebildet. Im Folgenden wird diese Verbindung als eine Einrenkverbindung bezeichnet. Die Einrenkverbindung umfasst mindestens den aus der Umfangsfläche der Leiterbahnfolie 34 radial vorstehenden Vorsprung 9, und einen an der Innenfläche des Behälters 18 angeordneten dazu axial verlaufendem Kanal 7, der Bestandteil des Rasthackens ist. Bei der Montage des Elektronikmoduls 20 wird die Flexibilität des Schaltungsträgers 34 ausgenutzt, indem der flexible Vorsprung 9 des Schaltungsträgers 34 durch das Drehen des Schaltungsträgers 34 mit Hilfe einer Steuerkurve 5 in den Kanal 7 nach unten gedrückt wird und schließlich in der Endposition einrastet. Ferner ist mindestens eine Positionierrippe 39 vorgesehen, welche dazu dient, das Elektronikmodul 20 sicher zu lagern. Nachdem das Elektronikmodul 20 montiert ist, liegt es mittels einer Presspassung an der Positionsrippe 39 an.
Das Elektronikmodul 20 umfasst, wie bereits oben beschrieben, den als flexible Leiterbahnfolie 34 ausgebildeten Schaltungsträger 34 aufweisend diverse Schaltelemente zur Messung und/oder Auswertung des Reifendrucks, insbesondere einen Drucksensor 38. Der Schaltungsträger 34 weist einen ersten Abschnitt 35 und einen zweiten Abschnitt 36 auf, wobei der erste Abschnitt 35 umfassend diverse Schaltelement innerhalb des Behälters 18 angeordnet ist. Der zweite Abschnitt 36 ist über die elektrische Leitung 21, welche ebenfalls Bestandteil der Leiterbahnfolie 34 ist, mit dem zweiten Abschnitt 36 verbunden. Der zweite Abschnitt 36 ist außerhalb des Behälters 18 angeordnet und dient zur Aufnahme eines Piezoelements 37, welches zur Energieversorgung des Reifenmoduls ausgebildet ist. Dabei ist das Piezoelement 37 an eine Oberfläche der Leiterbahnfolie 34 angeklebt. Der Schaltungsträger 34 selber ist dabei stoffschlüssig oder formschlüssig oder kraftschlüssig, insbesondere mit einem doppelseitig klebenden Element, mit der äußeren Grundfläche des Behälters 18 verbunden.

Wie in Figur 1 gezeigt, ist zwischen der äußeren Wandung 19, insbesondere der Wandung 26, 27 der Mantelfläche und der Grundfläche des Behälters 18 und der inneren Wandung der Wanne 17 ein Spalt 30 angeordnet ist, in welchem nach dem Vergießen des Behälters 18 Vergussmasse 22 angeordnet ist, welche in einen Innenraum 31 der Wanne 16 durch die Entlüftungsöffnungen 28 des Behälters 18 zugeführt wird. Um eine gleichmäßige Entlüftung zu erzielen, sind die Entlüftungsöffnungen 28 im Wesentlichen gegenüberliegend angeordnet.

Die Wanne 16 ist aus einem elastischen Material gefertigt. Vorzugsweise ist die Wanne 16 aus einer Kunststofffolie geformt, z. B. durch Tiefziehen oder durch Warmumformen. Die Wanne 16 weist einen Boden auf, der so dünn bemessen ist, dass er die Verformung des Reifens erlaubt und auf einen mechanisch elektrischen Wandler 37 überträgt, der am Behälter 18, vorzugsweise unmittelbar auf der Bodenwandung 25 der Wanne 16 angeordnet ist.

Im Folgenden wird ein Verfahren zum Herstellen des erfindungsgemäßen Reifenmoduls 1 beschrieben.
Wie bereits oben erwähnt, umfasst das Reifenmodul 1 den Container 2, die Reifendruckerfassungseinheit 14 sowie das Elektronikmodul 20 und den Behälter 18 mit Entlüftungsöffnungen 28.
Bei der Herstellung wird zunächst das Elektronikmodul 20 in den Behälter 18 angeordnet. Dort wird das Elektronikmodul 20 mittels Halte- und Positionsmitteln 32 im Behälter 18 befestigt. Der Behälter 18 wird vor dem Einfüllen von Vergussmasse 22 in der Wanne 16 angeordnet. Beim anschließenden Einfüllen der Vergussmasse 22 strömt das in dem Behälter 18 angeordnete Gas, insbesondere Luft, durch die Entlüftungsöffnungen 28 des Behälters 18 in einen durch die Wanne 16 und den Behälter 18 gebildeten Spalt 30. Des Weiteren wird das in den Spalt 30 eingeströmte Gas während des Vergießens der Vergussmasse 22 durch eine Saugvorrichtung abgesaugt, um Gaseinschlüsse in der Vergussmasse 22 zu verhindern. Nach dem Erstarren der Vergussmasse 22 wird durch die Vergussmasse 22 der Behälter 18 mit der Wanne 16 verbunden, wobei der in der Wanne 16 angeordnete Behälter 18 anschließend in dem Container 2 angeordnet wird.
Schließlich wird das Reifenmoduls 1, insbesondere der Container 2 mittels Vulkanisieren oder Kleben an einer inneren Wandung des Reifens befestigt.

### Bezugszeichenliste

- 1: Reifenmodul
- 2: Container
- 3: Kammer
- 4: erste Öffnung des Containers 2
- 5: Steuerkurve
- 6: zweite Öffnung
- 7: Kanal
- 8: erster Flansch
- 9: Vorsprung
- 10: zweiter Flansch
- 11: Abschnitt
- 12: Haftvermittlungsmittel
- 13: erste Entlüftungsöffnung
- 14: Reifendruckerfassungseinheit
- 15: zweite Entlüftungsöffnung
- 16: Wanne
- 17: innere Wandung der Wanne
- 18: Behälter
- 19: äußere Wandung des Behälters 18
- 20: Elektronikmodul
- 21: elektrische Leitung
- 22: Vergussmasse
- 23: Montageöffnung
- 24: Seitenwandung der Wanne 16
- 25: Bodenwandung der Wanne 16
- 26: Seitenwandung des Behälter 18
- 27: Bodenwandung des Behälters 18
- 28: Entlüftungsöffnungen
- 29: Ausnehmung im Behälter 18
- 30: Spalt
- 31: Innenraum der Wanne 16
- 32: Positioniermittel und Haltemittel des Behälters 18
- 33: Positioniermittel und Haltemittel des Elektronikmoduls 20
- 34: Schaltungsträger
- 35: erste Abschnitt des Schaltungsträgers 34
- 36: zweite Abschnitt des Schaltungsträgers 34
- 37: Piezoelement
- 38: Drucksensor
- 39: Positionsrippe

## Patentansprüche

1. Reifenmodul (1) zur Messung des Reifendrucks eines Fahrzeugreifens aufweisend einen Container (2), welcher in einem Hohlraum des Fahrzeugreifens befestigbar ist und zur Aufnahme einer Reifendruckerfassungseinheit (14) dient, welche zumindest ein Elektronikmodul (20) zur Erfassung des Reifendrucks umfasst, wobei das Reifenmodul (1) einen Behälter (18) aufweist, in welchem zumindest teilweise das Elektronikmodul (20) angeordnet ist, wobei das Elektronikmodul (20) in einer innerhalb des Behälters (18) angeordneten Vergussmasse (22) eingebettet ist,
wobei der Behälter (18) mindestens eine Entlüftungsöffnung (28) aufweist,
**dadurch gekennzeichnet, dass**
der Behälter (18) im Wesentlichen als topfförmiger Hohlzylinder ausgebildet ist, welcher jeweils eine als Seitenwandung (24, 26) ausgebildete Mantelfläche und als Bodenwandung (25, 27) ausgebildete Grundfläche aufweist und der Behälter (18) Entlüftungsöffnung (28) aufweist, welche in der Grundfläche und/oder Mantelfläche angeordnet sind.

2. Reifenmodul (1) nach Anspruch 1, **dadurch gekennzeichnet, dass** eine erste Entlüftungsöffnung (13) und eine zweite Entlüftungsöffnung (15) vorgesehen sind, wobei die erste Entlüftungsöffnung (13) im Wesentlichen gegenüber von der zweiten Entlüftungsöffnung (15) angeordnet ist.

3. Reifenmodul (1) nach Anspruch 1 oder 2, **dadurch gekennzeichnet, dass** die Entlüftungsöffnung (28) schlitzförmig und / oder rundförmig ausgebildet ist.

4. Reifenmodul (1) nach einem der Ansprüche 1 bis 3, **dadurch gekennzeichnet, dass** das Reifenmodul (1) eine Wanne (16) umfasst, welche zur Aufnahme des Behälters (18) dient.

5. Reifenmodul (1) nach Anspruch 4, **dadurch gekennzeichnet, dass** der Behälter (18) und die Wanne (16) im Wesentlichen komplementär zueinander ausgebildet sind, wobei die Wanne (16) und der Behälter (18) beabstandet zueinander angeordnet sind.

6. Reifenmodul (1) nach einem der Ansprüche 4 bis 5, **dadurch gekennzeichnet, dass** zwischen einer Wandung (19) des Behälters (18) und einer Wandung der Wanne (16) ein Spalt (30) angeordnet ist, in welchem nach dem Vergießen des Behälters (18) Vergussmasse (22) angeordnet ist, welche der Wanne (16) durch die Entlüftungsöffnungen (28) des Behälters (18) zuführbar ist.

7. Reifenmodul (1) nach Ansprüche 4 bis 6, **dadurch gekennzeichnet, dass** die Wanne (16) im Wesentlichen als topfförmiger Hohlzylinder ausgebildet ist, welcher jeweils eine als Seitenwandung (24, 26) ausgebildete Mantelfläche und als Bodenwandung (25, 27) ausgebildete Grundfläche aufweist.

8. Reifenmodul (1) nach einem der Ansprüche 1 bis 7, **dadurch gekennzeichnet, dass** der Behälter (18) und das Elektronikmodul (20) formschlüssig und/oder kraftschlüssig und/oder stoffschlüssig miteinander verbunden sind.

9. Reifenmodul (1) nach einem der Ansprüche 1 bis 8, **dadurch gekennzeichnet, dass** mindestens ein Positioniermittel und/oder mindestens ein Haltemittel (32) dem Behälter (18) und/oder mindestens ein Positioniermittel und/oder mindestens ein Haltemittel (33) dem Elektronikmodul (20) zugeordnet sind, die zur Verbindung des Elektronikmoduls (20) mit dem Behälter (18) dienen.

10. Reifenmodul (1) nach einem der Ansprüche 1 bis 8, **dadurch gekennzeichnet, dass** mindestens ein Positioniermittel und/oder mindestens ein Haltemittel (32) an der Seitenwandung (26) der Mantelfläche des Behälters (18) und/oder der Bodenwandung (27) der Grundfläche des Behälters (18) angeordnet ist.

11. Reifenmodul (1) nach einem der Ansprüche 1 bis 10, **dadurch gekennzeichnet, dass** das Elektronikmodul (20) einen Schaltungsträger (34) mit einem Piezoelement (37) aufweist, wobei der Schaltungsträger (34) stoffschlüssig oder formschlüssig oder kraftschlüssig, insbesondere mit einem doppelseitig klebenden Element, mit der äußeren Grundfläche des Behälters (18) verbunden ist.

12. Verfahren zum Herstellen eines Reifenmoduls (1), welches mindestens
- einen Container (2),
- eine Reifendruckerfassungseinheit (14) umfassend ein Elektronikmodul (20) und
- einen Behälter (18) mit Entlüftungsöffnungen (28) aufweist, umfassend folgende Schritte:
a) Anordnen des Elektronikmoduls (20) in den Behälter (18),
b) Positionieren und/oder Befestigen des Moduls im Behälter (18),
c) Einfüllen von Vergussmasse (22) in den Behälter (18), um das innerhalb des Behälters (18) angeordnete Elektronikmodul (20) abzudichten,
d) Anordnen des Behälters (18) aufweisend das Elektronikmodul (20) in den Container (2), und
e) Befestigung des Reifenmoduls (1), insbesondere des Containers (2), an einer inneren Wandung des Reifens,
f) wobei vor dem Einfüllen von Vergussmasse (22) der Behälter (18) in einer Wanne (16) angeordnet wird und beim anschließenden Einfüllen der Vergussmasse (22) das in dem Behälter (18) angeordnete Gas, insbesondere Luft, durch die Entlüftungsöffnungen (28) des Behälters (18) in einen durch die Wanne (16) und den Behälter (18) gebildeten Spalt (30) strömt.

13. Verfahren zum Herstellen eines Reifenmoduls nach Anspruch 12 **dadurch gekennzeichnet, dass** das in den Spalt (30) eingeströmte Gas während des Vergießens der Vergussmasse (22) und/oder nach dem Vergießen der Vergussmasse (22) durch eine Saugvorrichtung abgesaugt wird, um Gaseinschlüsse in der Vergussmasse (22) zu verhindern.

14. Verfahren zum Herstellen eines Reifenmoduls (1) nach Anspruch 12 oder 13, **dadurch gekennzeichnet, dass** die Vergussmasse (22) durch die Entlüftungsöffnungen (28) des Behälters (18) strömt und die Vergussmasse (22) nach dem Erstarren den Behälter (18) mit der Wanne (16) verbindet, wobei der in der Wanne (16) angeordnete Behälter (18) anschließend in den Container (2) angeordnet wird.

## Claims

1. Tyre module (1) for measuring the tyre pressure of a motor vehicle tyre including a container (2) that is fastenable in a cavity of the vehicle tyre and serves to accommodate a tyre pressure capture unit (14) which comprises at least one electronic module (20) for capturing the tyre pressure, wherein the tyre module (1) includes a receptacle (18) in which at least part of the electronic module (20) is arranged, wherein the electronic module (20) is embedded in a casting compound (22) arranged inside the receptacle (18), wherein the receptacle (18) includes at least one ventilation opening (28),
**characterised in that**
the receptacle (18) is substantially in the shape of a pot-like hollow cylinder, which has a shell surface conformed as each side wall (24, 26) and has a base surface conformed as the bottom wall (25, 27), and the receptacle (18) has ventilation openings (28) that are arranged in the base surface and/or the shell surface.

2. Tyre module (1) according to claim 1, **characterised in that** a first ventilation opening (13) and a second ventilation opening (15) are provided, wherein the first ventilation opening (13) is arranged substantially opposite the second ventilation opening (15).

3. Tyre module (1) according to claim 1 or 2, **characterised in that** the ventilation opening (28) is slit-shaped and/or round.

4. Tyre module (1) according to one of claims 1 to 3, **characterised in that** the tyre module (1) comprises a trough (16) that serves to accommodate the receptacle (18).

5. Tyre module (1) according to claim 4, **characterised in that** the receptacle (18) and the trough (16) are constructed essentially to complement each other, wherein the trough (16) and the receptacle (18) are arranged at a distance from each other.

6. Tyre module (1) according to either of claims 4 or 5, **characterised in that** a gap (30) is situated between a wall (19) of the receptacle (18) and a wall of the trough, in which casting compound (22) is arranged after the receptacle (18) is cast, which compound can be fed to the trough (16) through the ventilation openings (28) in the receptacle (18).

7. Tyre module (1) according to any of claims 4 to 6, **characterised in that** the trough (16) is substantially in the shape of a pot-like hollow cylinder, which has one shell surface conformed as each side wall (24, 26) and has a base surface conformed as the bottom wall (25, 27).

8. Tyre module (1) according to one of claims 1 to 7, **characterised in that** the receptacle (18) and the electronic module (20) are connected to one another in form-fitting and/or non-positive locking and/or adhesively bonded manner.

9. Tyre module (1) according to one of claims 1 to 8, **characterised in that** at least one positioning means and/or at least one retaining means (32) are allocated to the receptacle (18), and/or at least one positioning means and/or at least one retaining means (33) are allocated to the electronic module (20), and serve to connect the electronic module (20) to the receptacle (18).

10. Tyre module (1) according to one of claims 1 to 8, **characterised in that** at least one positioning means and/or at least one retaining means (32) is arranged on the side wall (26) of the shell surface of the container (18) and/or the bottom wall (27) of the base surface of the receptacle (18)

11. Tyre module (1) according to one of claims 1 to 10, **characterised in that** the electronic module (20) includes a circuit carrier (34) with a piezoelectric element (37), wherein the circuit carrier (34) is connected to the outer base surface of the receptacle (18) by adhesive bonding or in form-fitting or non-positive locking manner, particularly with a double-sided adhesive element.

12. Method for producing a tyre module (1) which includes at least
- a container (2),
- a tyre pressure capture unit (14) comprising an electronic module (20) and
- a receptacle (18) with ventilation openings (28), comprising the following steps:
a) arranging the electronic module (20) in the receptacle (18),
b) positioning and/or fastening the module in the receptacle (18),
c) filling the receptacle (18) with casting compound (22) to seal off the electronic module (20) arranged inside the receptacle (18),
d) arranging the receptacle (18) including the electronic module (20) in the container (2), and
e) fastening the tyre module (1), particularly the container (2), to an inner wall of the tyre,
f) wherein the receptacle is disposed in a trough (16) before being filled with casting compound (22), and when the casting compound (22) is subsequently added the gas located in the receptacle (18), particularly air, flows through the ventilation openings (28) in the receptacle (18) and into a gap (30) formed by the trough (16) and the receptacle (18).

13. Method for producing a tyre module according to claim 12, **characterised in that** the gas which has flowed into the gap (30) during casting of the casting compound (22) and/or after casting of the casting compound (22) is extracted by a suction device in order to prevent inclusions of gas in the casting compound (22).

14. Method for producing a tyre module (1) according to claim 12 or 13, **characterised in that** the casting compound (22) flows through the ventilation openings (28) in the receptacle (18) and the casting compound (22) connects the receptacle (18) to the trough (16) after it solidifies, wherein the receptacle (18) arranged in the trough (16) is then positioned in the container (2).

## Revendications

1. Module de pneumatique (1) pour la mesure de la pression de pneumatique d'un pneumatique de véhicule comprenant un conteneur (2), lequel peut être fixé dans un espace creux du pneumatique de véhicule et sert à loger une unité de saisie de pression de pneumatique (14), laquelle comprend au moins un module électronique (20) pour saisir la pression du pneumatique, le module de pneumatique (1) comportant un réceptacle (18) dans lequel est disposé au moins en partie le module électronique (20), le module électronique (20) étant incorporé dans une masse de remplissage (22) disposée à l'intérieur du réceptacle (18), le réceptacle (18) comportant au moins une ouverture d'aération (28), **caractérisé en ce que** le réceptacle (18) est constitué pour l'essentiel comme un cylindre creux en forme de marmite, lequel comporte respectivement une surface d'enveloppe constituée comme paroi latérale (24,26) et une surface de base constituée comme paroi de fond (25,27) et le réceptacle (18) comporte une ouverture d'aération (28), lesquelles sont disposées dans la surface de base et/ou la surface d'enveloppe.

2. Module de pneumatique (1) selon la revendication 1, **caractérisé en ce qu**'une première ouverture d'aération (13) et une deuxième ouverture d'aération (15) sont prévues, la première ouverture d'aération (13) étant disposée pour l'essentiel en face de la deuxième ouverture d'aération (15).

3. Module de pneumatique (1) selon la revendication 1 ou 2, **caractérisé en ce que** l'ouverture d'aération (28) est constituée en forme de fente et/ou de forme ronde.

4. Module de pneumatique (1) selon l'une quelconque des revendications 1 à 3, **caractérisé en ce que** le module de pneumatique (1) comprend une cuve (16), laquelle sert à loger le réceptacle (18).

5. Module de pneumatique (1) selon la revendication 4, **caractérisé en ce que** le réceptacle (18) et la cuve (16) sont constitués pour l'essentiel de façon complémentaire l'un par rapport à l'autre, la cuve (16) et le réceptacle (18) étant disposés à distance l'un de l'autre.

6. Module de pneumatique (1) selon l'une quelconque des revendications 4 à 5, **caractérisé en ce qu**'un interstice (30) est disposé entre une paroi (19) du réceptacle (18) et une paroi de la cuve (16) dans lequel est disposée une masse de remplissage (22) après la coulée du réceptacle (18), laquelle peut être acheminée à la cuve (16) à travers les ouvertures d'aération (28) du réceptacle (18).

7. Module de pneumatique (1) selon les revendications 4 à 6, **caractérisé en ce que** la cuve (16) est constituée pour l'essentiel comme un cylindre creux en forme de marmite, lequel comporte respectivement une surface d'enveloppe constituée comme paroi latérale (24,26) et une surface de base constituée comme paroi de fond (25, 27).

8. Module de pneumatique (1) selon l'une quelconque des revendications 1 à 7, **caractérisé en ce que** le réceptacle (18) et le module électronique (20) sont reliés entre eux par conformité de forme et/ou par adhérence et/ou par conformité de matière.

9. Module de pneumatique (1) selon l'une quelconque des revendications 1 à 8, **caractérisé en ce qu'**au moins un moyen de positionnement et/ou au moins un moyen de fixation (32) sont attribués au réceptacle (18) et/ou au moins un moyen de positionnement et/ou au moins un moyen de fixation (33) sont attribués au module électronique (20), qui servent à relier le module électronique (20) au réceptacle (18).

10. Module de pneumatique (1) selon l'une quelconque des revendications 1 à 8, **caractérisé en ce qu***'*au moins un moyen de positionnement et/ou au moins un moyen de fixation (32) sont disposés sur la paroi latérale (26) de la surface d'enveloppe du réceptacle (18) et/ou de la paroi de fond (27) de la surface de base du réceptacle (18).

11. Module de pneumatique (1) selon l'une quelconque des revendications 1 à 10, **caractérisé en ce que** le module électronique (20) comporte un support de connexion (34) avec un élément piézoélectrique (37), le support de connexion (34) étant relié à la surface de base extérieure du réceptacle (18) par conformité de matière ou conformité de forme ou par adhérence, notamment avec un élément adhésif des deux côtés.

12. Procédé pour la fabrication d'un module de pneumatique (1), lequel comprend au moins
- un conteneur (2),
- une unité de saisie de pression de pneumatique (14) comprenant un module électronique (20) et
- un réceptacle (18) avec une ouverture d'aération (28), comprenant les étapes suivantes :
a) montage du module électronique (20) dans le réceptacle (18),
b) positionnement et/ou fixation du module dans le réceptacle (18),
c) remplissage de la masse de remplissage (22) dans le réceptacle (18) pour étanchéifier le module électronique (20) disposé à l'intérieur du réceptacle (18),
d) montage du réceptacle (18) comprenant le module électronique (20) dans le conteneur (2), et
e) fixation du module de pneumatique (1), notamment du conteneur (2), sur une paroi intérieure du pneumatique,
f) le réceptacle (18) étant disposé dans une cuve (16) avant le remplissage de la masse de remplissage (22) et le gaz, notamment l'air, disposé dans le réceptacle (18) lors du remplissage ultérieur de la masse de remplissage (22), s'écoulant à travers les ouvertures d'aération (28) du réceptacle (18) dans un interstice (30) formé par la cuve (16) et le réceptacle (18).

13. Procédé pour la fabrication d'un module de pneumatique selon la revendication 12, **caractérisé en ce que** le gaz pénétré dans l'interstice (30) pendant la coulée de la masse de remplissage (22) et/ou après la coulée de la masse de remplissage (22) est aspiré par un dispositif d'aspiration pour éviter des inclusions de gaz dans la masse de remplissage (22).

14. Procédé pour la fabrication d'un module de pneumatique (1) selon la revendication 12 ou 13, **caractérisé en ce que** la masse de remplissage (22) s'écoule à travers les ouvertures d'aération (28) du réceptacle (18) et la masse de remplissage (22) réunit le réceptacle (18) à la cuve (16) après la solidification, le réceptacle (18) disposé dans la cuve (16) étant disposé ultérieurement dans le conteneur (2).
